# EUROPEAN PATENT APPLICATION

(11) **EP 0 762 177 A2**
(43) Date of publication of application: **12.03.1997**
(21) Application number: 96113683.5
(22) Date of filing: 27.08.1996
(51) Int. Cl.: G02B 27/22

(54) **Stereoscopic display using a lenticular lens sheet**

(30) Priority: 06.09.1995 GB 9518134
(71) Applicant: THOMSON multimedia, 92400 Courbevoie (FR)
(72) Inventor: Chikazawa, Yoshiharu, Yokohama 221 (JP)
(74) Representative: Ahrens, Thomas, Dipl.-Phys.

(57) **Abstract**

In an stereoscopic display using a lenticular lens sheet to create the stereoscopic image a Moiré pattern exists, which is caused by the lenticular lens pitch and the pixel pitch. This Moiré pattern on the display obstructs the view which is not only the stereoscopic image but also the normal two-dimensional image.

To overcome this Moiré obstruct, a diffuser is used in the stereoscopic display using lenticular lens sheet, so that the contrast of the Moiré pattern gets weaker or is even avoided.

## Description

The invention relates to a stereoscopic display system, in particular to a stereoscopic display system using a lenticular lens sheet to generate the stereoscopic effect.

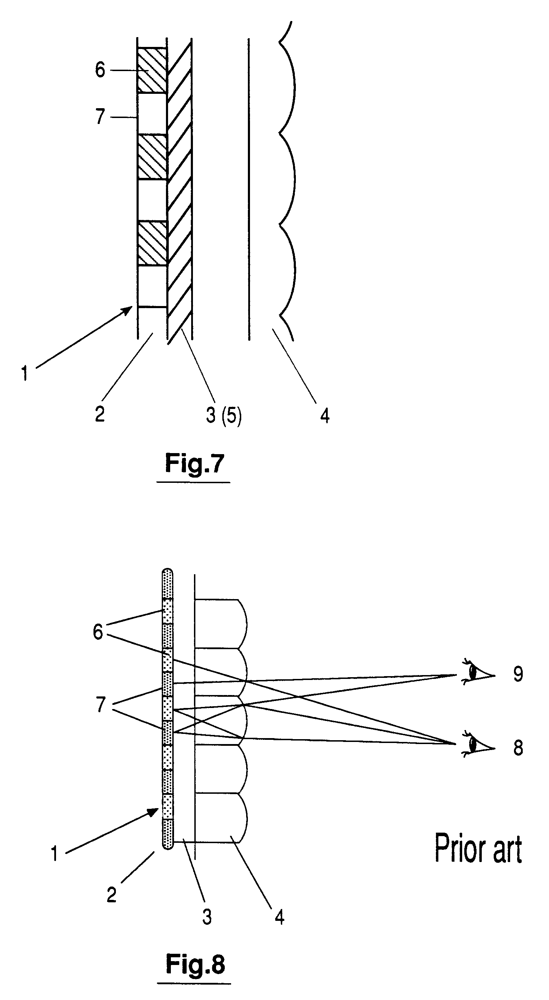

Three dimensional stereoscopic images can be generated by a variety of methods, one of which is the stereoscopic display using lenticular lens sheets shown in Fig. 8, which uses in principle a binocular parallax method. Fig. 8 shows a lenticular lens sheet placed in front of a display. This display comprises a number of display dots or pixels which are arranged in a flat plane (pixel plane), if a flat panel display is used. The display further comprises a front glass located in front of the pixel plane. In a horizontal row of pixels, the pixels for the left image are alternating with the pixels for the right image. Because of the lenticular sheet a stereoscopic image is formed in a specific distance and position because the right eye only sees the image of pixels for the right image whereas the left eye only sees pixels for the left image. The lenticular lens sheet can be constructed according to a previously performed ray trace simulation. The width of a lenticular lens is approximately 2 pixels, as can be seen in Fig. 8.

Because of the lenticular lens pitch and pixel pitch, the stereoscopic display using a lenticular lens sheet creates a Moiré pattern, if the eyes are not set at a suitable position. This Moiré pattern on the display obstructs the view of the normal two-dimensional image, if the eyes are not set in a suitable stereoscopic position.

It is therefore an object of the present invention to provide a stereoscopic display using lenticular lens sheet wherein the effect of the Moiré pattern is decreased or even avoided.

This object is solved by the invention according to the features of claim 1.

Further preferred embodiments of the invention are given in the dependent claims.

By putting a diffuser at an appropriate position into the stereoscopic display the system using a lenticular lens sheet, the contrast of the Moiré pattern gets weaker or is even avoided.

Therefore the invention has the following advantages: In an outer area of a suitable position of the stereoscopic view a normal two-dimensional image without Moiré obstruct can be seen and the stereoscopic image is visible not only from the front of the display but also from the sides of the display without the Moiré obstruct.

Further in prior stereoscopic displays using a lenticular lens sheet, one must consider the correlation between the direction of an RGB pattern of the display in the direction of the lenticular lens. If the diffuser is set in a suitable position, rays from the RGB dots are mixed, and "the cross talk of right eye image and left eye image" does not get worse so that the Moiré contrast gets weaker.

The diffuser used for this invention can be realised as it is well known for a person skilled in the art.

So, for example, the diffuser can be realised by a surface having a roughness larger than half of the wavelength of red light. Another possibility is a layer with particles or bubbles inside which scatter the light transmitted from the RGB dots.

Of course, other well known realisations for the diffuser are possible.

Preferably the diffuser used in a stereoscopic display according to the invention is a diffuser plate which can be located in front of the lenticular lens sheet or between the lenticular lens sheet and the display.

Further the diffuser of the stereoscopic display according to the invention can be placed as a layer on the front side or/and the rear side of lenticular lens sheet, or as a layer on the front side of the display front glass.

Further the diffuser of the stereoscopic display is realized with a diffusing lenticular lens sheet or as a diffusing front glass using e.g. matt glasses.

Preferred embodiments of a stereoscopic display using lenticular lens sheet according to the invention will now be described by way of examples with reference to the accompanying drawings, in which:
- Fig. 1: shows the basic arrangement with the diffuser plate in front of the lenticular lens sheet,
- Fig. 2: shows a further embodiment with the diffuser plate between the front glass and the lenticular lens sheet,
- Fig. 3: shows an embodiment with a diffuser layer on front side of the lenticular lens sheet,
- Fig. 4: shows an embodiment with the diffuser layer on the rear side of the lenticular lens sheet,
- Fig. 5: shows an embodiment with the diffuser layer on the front side of the front glass,
- Fig. 6: shows an embodiment wherein the lenticular lens sheet is formed by a matt material, and
- Fig. 7: shows an embodiment with a diffusing front glass, and
- Fig. 8: shows the basic principle of a stereoscopic display using lenticular a lens sheet.

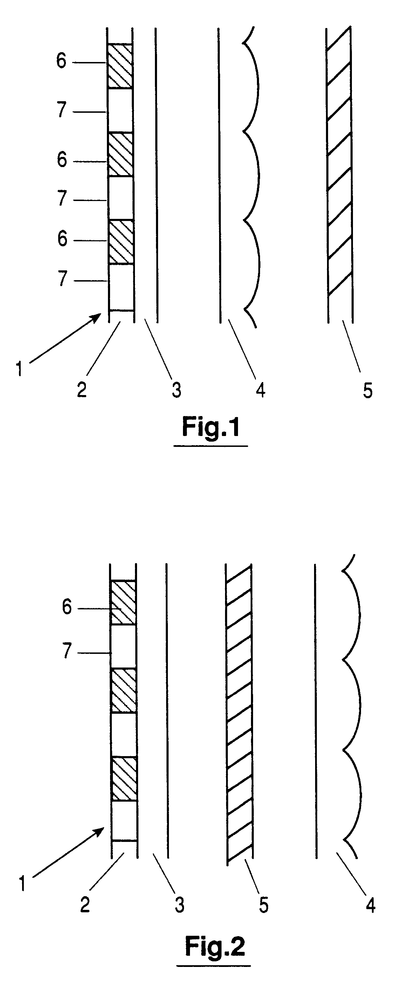

Fig. 1 shows a stereoscopic display using a lenticular lens sheet consisting of a display 1 with a pixel plane 2 having pixels 6 for left image and pixels 7 for right image and a front glass 3. A lenticular lens sheet 4 is arranged under a prescribed distance in front of the display 1. A diffuser 5 in form of a diffuser plate is arranged in front of the lenticular lens sheet 4 with a prescribed distance.

Fig. 2 shows an embodiment, in which the diffuser plate 5 is arranged between the display 1 and the lenticular lens sheet 4 with a prescribed distance to the front glass 3 and the rear surface of the lenticular lens sheet 4.

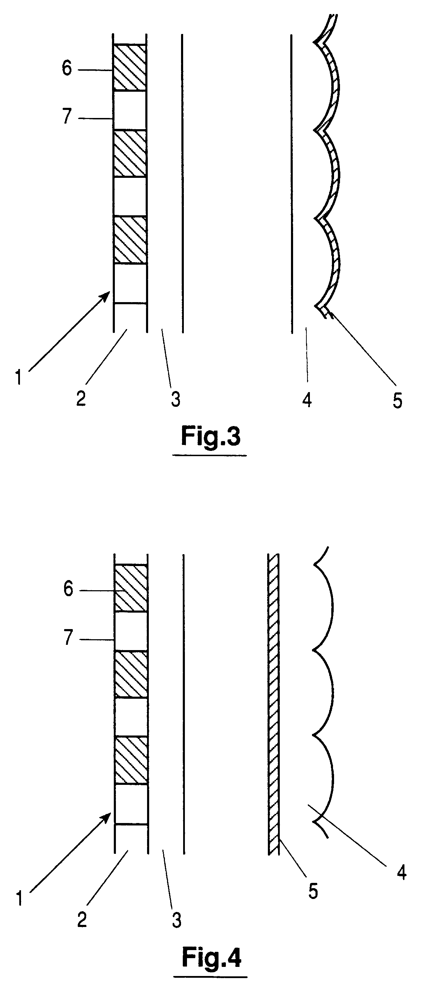

Fig. 3 shows an embodiment in which the diffuser 5 is formed as a layer on the front surface of the lenticular lens sheet 4.

Fig. 4 shows a further embodiment, in which the diffuser 5 is formed as a layer on the rear side of the lenticular lens sheet 4. It is further possible to form the diffuser 5 on both sides of the lenticular lens sheet 4 (not shown).

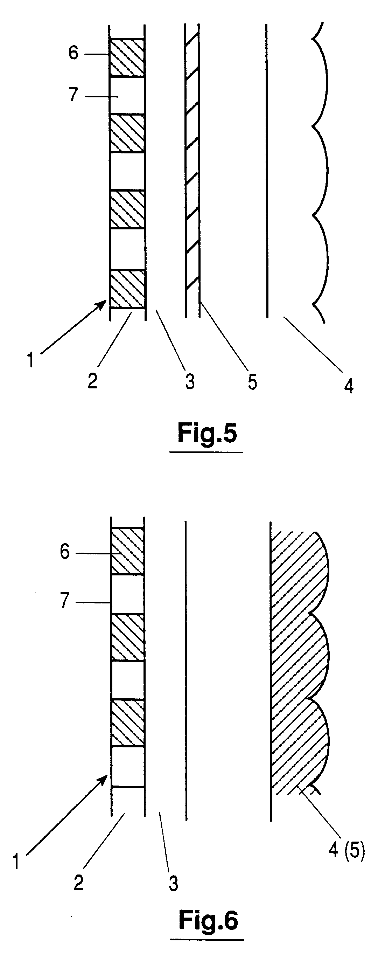

Fig. 5 shows an embodiment, in which the diffuser 5 is formed as a layer on the front side of the front glass 3 of the display 1.

Figures 6 and 7 show two embodiments, in which the diffuser is formed by the front glass 3 or the lenticular lens sheet 4 itself, wherein the front glass 3 or the lenticular lens sheet 4 are formed by a matt material.

The above embodiments use a display, but it is possible to use a screen or a projector instead of the display. In this case it is possible to use a diffusing screen for avoiding the Moiré pattern.

It is also possible to combine the above examples and/or matt surfaces. Further in the above examples, there are spaces between the lenticular lens sheet 4, the display 1 and the diffuser 5, but it is also possible to exclude these spaces.

Fig. 8 shows schematically in plan view the known basic principle of a stereoscopic display 1 using a lenticular lens sheet 4. A flat panel display 1 comprises a pixel plane 2 and a front glass 3. In front of the front glass 3 there is provided a lenticular lens sheet 4. Left image pixels 6 are arranged alternately with right image pixels 7 in a scanning row. To create the stereoscopic effect the lenticular lens sheet 4 directs left image pixels 6 to the left eye 8 and right image pixels 7 to the right eye 9 if the eyes are set in an apppropriate position. Because of the lenticular lens pitch and the pixel pitch a Moiré pattern can be generated.

## Claims

1. Stereoscopic display comprising a flat panel display (1) with a pixel plane (2) for left and right image pixels (6, 7) and a glass plate (3) followed by a lenticular lens sheet (4), characterized in that this stereoscopic display further comprises a diffuser (5).

2. Stereoscopic display according to claim 1 characterized in that the diffuser (5) is located in front of the lenticular lens sheet (4).

3. Stereoscopic display according to claim 1, characterized in that the diffuser (5) is located between the front glass (3) and the lenticular lens sheet (4).

4. Stereoscopic display according to any of the preceding claims, characterized in that the diffuser (5) is formed by a diffuser plate.

5. Stereoscopic display according to claim 1, characterized in that the diffuser (5) is placed as a layer on the lenticular lens sheet (4).

6. Stereoscopic display according to claim 5, characterized in that the diffuser layer (5) is placed either on the front side or the rear side of the lenticular lens sheet (4).

7. Stereoscopic display according to claim 5, characterized in that the diffuser layer (5) is placed on both sides of the lenticular lens sheet (4).

8. Stereoscopic display according to claim 1, characterized in that the diffuser (5) is placed in the form of a layer on the front side of the front glass (3) of the display (1).

9. Stereoscopic display according to claim 1, characterized in that the diffuser (5) is realized with a diffusing lenticular lens sheet (4).

10. Stereoscopic display according to claim 1, characterized in that the diffuser (5) is realized by a diffusing front glass (3).
